# EUROPEAN PATENT APPLICATION

(11) **EP 3 273 582 A1**
(43) Date of publication of application: **24.01.2018**
(21) Application number: 16020274.3
(22) Date of filing: 18.07.2016
(51) Int. Cl.: H02K 44/00, H02K 44/08, H02K 7/18

(54) **HIGH VOLUME AIR/GAS/FLUID FLOW POWERED TORUS SHAPED ELECTRIC GENERATOR**

(71) Applicant: Parlatos, Stelios, 4527 Limassol (CY)
(72) Inventor: Parlatos, Stelios, 4527 Limassol (CY)

(57) **Abstract**

A high volume air, gas or fluid flow powered torus electric generator includes a hollow torus shaped housing **10,** an insulated copper coil winding **13,** an entrance point **11** and an exit point **12** for the flow, a sphere shaped permanent magnet **14** and the terminals of the copper coil windings **16, 17.** Thus, flow can be used to produce electricity just by forcing the magnetic sphere to revolve inside the hollow torus shaped housing and thus through the coil. This generator can convert kinetic energy from the flow into electric energy and vice versa in a simple and not much demanding way.

## Description

### Technical field to which invention relates:

The present invention relates to a torus shaped electric generator which is operated by the flow of air, gas or fluid.

### Indication of the background art:

A conventional electric generator that is operated by air, gas or fluid flow is consisted usually of two parts, a turbine and an electric generator that shares the same axle with turbine. The flow is used to set in motion the turbine and thus the rotor of the electric generator. This process leads to the production of electricity. Almost every system in the world that converts the energy from a flow into electricity and vice versa operates with this principle.

### Technical problem to be solved:

The objective of the present invention is to provide an electric generator which is compact, light, simple and consisted of only one part.

### Disclosure of invention:

In accordance with the present invention, there is provided at least a torus shaped housing, a magnetic sphere and a coil. The torus has an enter point to let the flow pass and an exit point to let the flow out of the torus. The torus has to have at least one coil or more wrapped on it. There is inside the torus a magnetic sphere which is free to move in the torus. When air, gas or fluid flow is applied in the enter point of the torus, the magnetic sphere start to revolve inside the torus. While the magnetic sphere passes through the point of the torus where the coil is wrapped, the magnetic field of the sphere causes an induction to the coil, so electricity is produced. At each revolution, the flow which causes the magnetic sphere to spin, exits from the exit point of the torus.

### Brief description of drawings:

In the drawings:

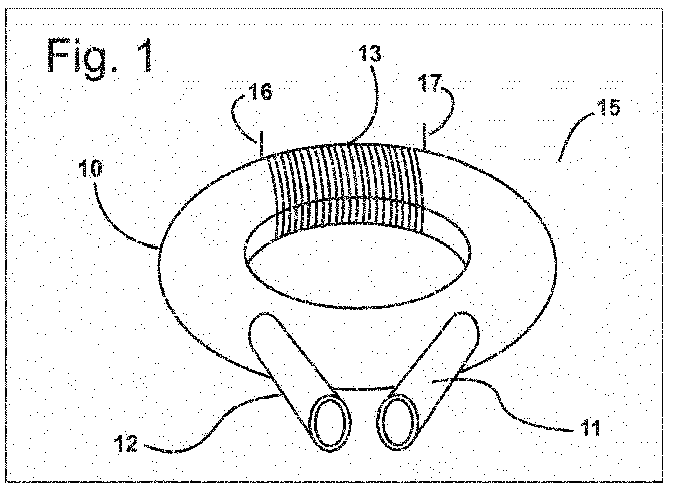

Fig.1 is a possible perspective view of a torus shaped electric generator in accordance with the present invention.

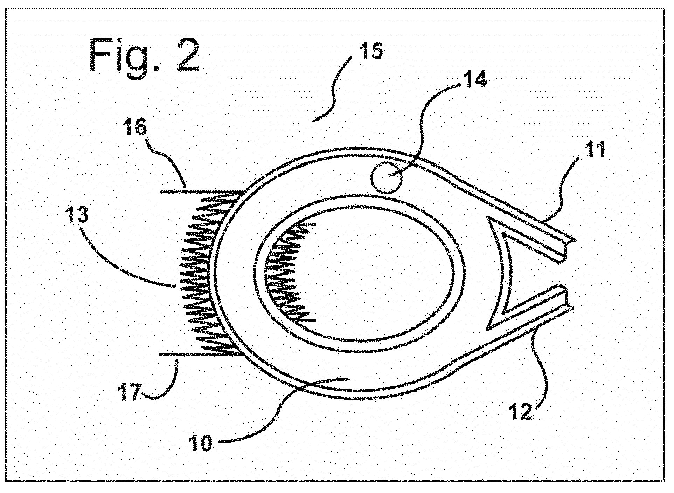

Fig.2 is a possible top-sectioned perspective view of the present invention showing the sectioned torus shaped inner chamber in better detail.

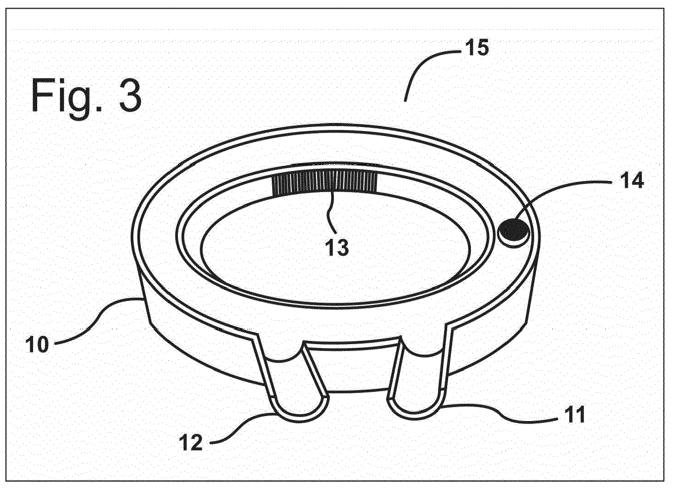

Fig.3 is a possible side view of the torus shaped electric generator in accordance with the present invention.

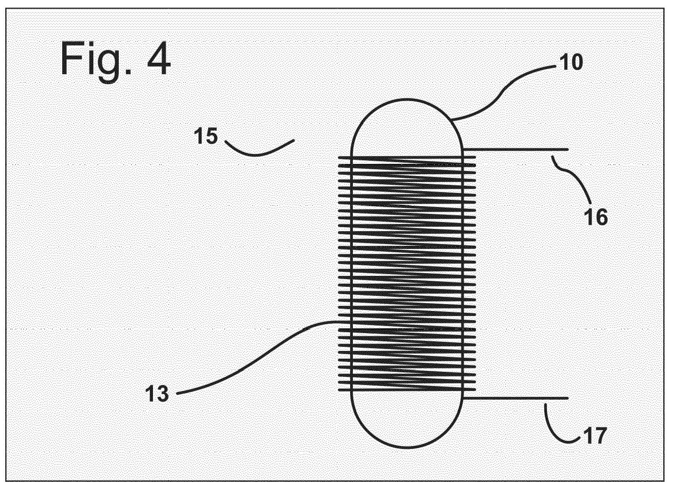

Fig.4 is a possible top-sectioned view of the torus shaped electric generator in accordance with the present invention showing the internal components in greater detail.

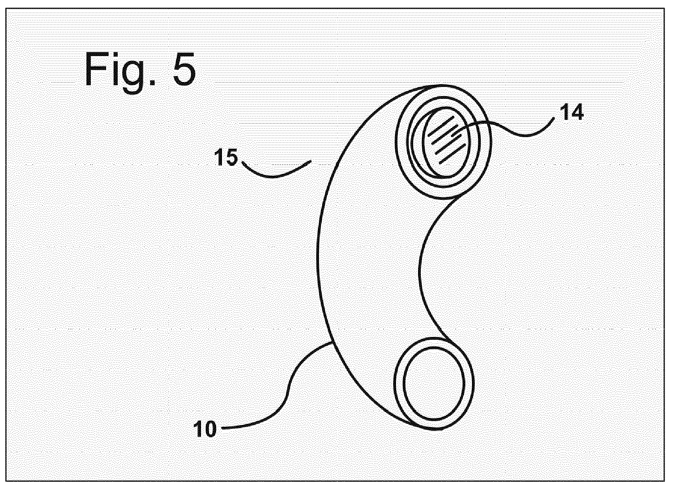

Fig.5 is a possible side sectioned perspective view of the present invention showing the internal chamber of the hollow torus shaped housing.

### Description of at least one way of carrying out the invention:

Referring to the drawings and to **Figs**.1-4, a torus shaped electric generator in accordance with the present invention has to made up of at least five principal assemblies **15** that form a hollow torus shape **10,** at least one insulated copper coil winding **13,** a magnetic ball/sphere **14,** terminals of the copper coil winding **16, 17,** an entrance point **11** and an exit point **12.** The points **11** and **12** can also have opposing roles that depends on the direction of the magnetic sphere **14.**

Air, gas or fluid flow passes into the torus **10** through the entrance point **11** and forces the magnetic sphere **14** to spin very quickly in the torus **10.** The air, gas or fluid flow must be driven outside the torus **10** through the exit point **12** to maintain continuous flow through the entrance point **11** from the source that causes the flow. While the magnetic sphere **14** revolves quickly inside the torus **10,** the magnetic field of the magnetic sphere **14** is causes induction to the insulated copper coil winding **13,** so electricity is produced and can be used by connecting the terminals **16, 17** of the coil with any device. The diameter of the entrance/exit points **11** and **12** must be slightly smaller than the diameter of the magnetic sphere **14** to avoid the escape of the magnetic sphere **14** through the entrance/exit points **11** and **12.** Also, the diameter of the magnetic sphere **14** must be slightly smaller than the inner diameter of the torus **10.**

## Claims

1. A torus shaped electric generator, comprising:
A hollow torus shaped housing **10;**
Insulated copper coil windings **13;**
Terminals of the copper coil windings **16, 17;**
An entrance point **11** where the flow passes through;
An exit point **12** where the flow leaves through;
A sphere shaped permanent magnet **14** that revolves within said hollow ring torus chamber when flow passes through the entrance point **11** and exits through the exit point **12.** The motion of the magnetic sphere **14** causes induction to the coil **13** that is wrapped on the external of the hollow torus housing **10,** thus electricity is produced. The electrical charge that is produced can be used through the terminals **16, 17** of the copper coil winding **13.**

2. The generator in accordance with claim 1, wherein:
The generator assembly can have anywhere on the hollow torus shaped housing **10** two or more points which can have the roles of entrance points **11** or exit points **12** and can be configured as needed.

3. The generator in accordance with claim 1, wherein:
The sphere shaped permanent magnet **14** can be hollow inside to reduce the weight and so needs less energy to revolve inside the torus housing **10** and can spin even more quick.

4. The generator in accordance with claim 1, wherein:
A lubrication system can be combined with the generator in order to lubricate the magnetic sphere **14** for friction reduction and quicker spinning with less energy.

5. The generator in accordance with claim 1, wherein:
One or more escape valves for the flow can be incorporated in the generator in case of a fault inside the hollow torus housing **10** such as the magnetic sphere **14** can't spin. In this scenario, back pressured is created and can be catastrophic for the hollow torus housing **10** or the source of the flow, so the flow must escape to prevent damage.

6. The generator in accordance with claim 1, wherein:
The hollow torus housing **10** can be made of a non magnetic durable material such as titanium, aluminium, plastic, carbon fiber and others and can be a whole piece or can be separated in two or more pieces for easier assembly. Also, if there are two or more pieces, these can be assembled with non magnetic screws such as titanium to prevent the affection of the direction or the speed of the magnetic sphere **14.**

7. The generator in accordance with claim 1, wherein:
One or more insulated copper coils **13** can be wrapped on the external of hollow torus housing **10,** but if the torus housing **10** is made by metallic material such as titanium or aluminium, there must be insulation between the torus housing **10** and the coils **13** to prevent leakage of the electric energy or short-circuit.

8. The generator in accordance with claim 1, wherein:
The generator can also have the opposite role. It can be a pump engine where electric energy is applied on the coils and the induction that is produced causes the magnetic sphere **14** to evolve inside the hollow torus housing **10.** The rotation of the magnetic sphere **14** causes the pressure of air, gas or a fluid that passes inside the hollow torus housing **10** through the entrance point **11.** The pressure flow that is produced leaves with fast speed from the exit point **12.**

9. The generator in accordance with claim 1, wherein:
A valve can be added inside the hollow torus housing **10** between the exit point **12** and the entrance point **11,** in the shorter distance. When the magnetic sphere **14** passes the open valve, a sensor detects this motion and the valve is closed electronically, so when the compressed flow passes through the entrance point **11,** the pressure between the magnetic sphere **14** and the valve is higher than the pressure in front of the magnetic sphere **14.** This leads to a more exerted energy on the magnetic sphere **14** which in turn spins more quickly in the hollow torus housing **10.** When the magnetic sphere **14** passes through a specific point, the valve is open again so the magnetic sphere can pass the open valve and the procedure can be repeated.

10. The generator in accordance with claim 1, wherein:
Instead of only one magnetic sphere **14,** a link of two or more magnetic spheres can be used in the hollow torus housing **10,** in order of larger magnetic field, thus more electricity is generated. The link of the magnetic spheres can be designed like the link of balls that ball bearings use or like a link of wings that can be like a fan with a sphere shaped permanent magnet **14** or with a different shape attached on each wing and moves free inside the hollow torus housing **10.**

11. The generator in accordance with claim 1, wherein:
A cooling system can be combined with the generator in order to cool down the hollow torus housing **10** in case of overheating which can be caused by friction or hot air, gas or fluid flow.

12. The generator in accordance with claim 1, wherein:
The terminals of the copper coil windings **16, 17** can be connected with any electric or electronic device for storing the electrical charge or using the charge at the same time.

13. The generator in accordance with claim 1, wherein:
Other than copper, the coil winding **13** can be made by other non magnetic materials such as gold.
